# EUROPÄISCHE PATENTSCHRIFT

(11) **EP 1 105 652 B1**
(45) Veröffentlichungstag und Bekanntmachung des Hinweises auf die Patenterteilung: **06.11.2002**
(21) Anmeldenummer: 99934443.5
(22) Anmeldetag: 10.08.1999
(51) Int. Cl.: F16B 7/04, E04B 2/76

(54) **VERBINDER ZUM VERBINDEN VON ZWEI QUER ZUEINANDER VERLAUFENDEN HOHLPROFILSTANGEN SOWIE GESTELL MIT EINEM SOLCHEN VERBINDER UND HOHLPROFILSTANGEN**
CONNECTOR FOR TWO HOLLOW PROFILED CROSS-RUNNING BARS AND FRAME COMPRISING SAID CONNECTOR AND HOLLOW PROFILED BARS
RACCORD DESTINE A RELIER DEUX BARRES A PROFIL CREUX PLACEES DANS UN SENS TRANSVERSAL L'UNE PAR RAPPORT A L'AUTRE, AINSI QUE BATI COMPOSE DESDITS RACCORDS ET DESDITES BARRES

(30) Priorität: 13.08.1998 CH 167098; 04.12.1998 CH 240998
(43) Veröffentlichungstag der Anmeldung: 13.06.2001
(73) Patentinhaber: GEBERIT TECHNIK AG, 8645 Jona (CH)
(72) Erfinder: LECHNER, Peter, CH-8645 Jona (CH)
(74) Vertreter: Groner, Manfred
(86) Internationale Anmeldenummer: CH9900368
(87) Internationale Veröffentlichungsnummer: WO00009893

(56) Entgegenhaltungen:
- EP-A- 0 675 292
- DE-U- 29 801 893
- US-A- 3 356 395
- US-A- 5 048 995
- US-A- 5 269 619

## Beschreibung

Die Erfindung betrifft einen Verbinder nach dem Oberbegriff des Anspruchs 1. Die Erfindung betrifft zudem ein Gestell mit einem solchen Verbinder und Hohlprofilstangen.

Verbinder der genannten Art sind beispielsweise aus der EP 0 675 292 A1 des Anmelders bekannt geworden. Dieser besitzt einen klammerförmig ausgebildeten Riegelkörper, der das Fussende bildet und der mit einer Spreizvorrichtung quer zu seiner Längsrichtung aufspreizbar ist. Aussenseitig besitzt der Riegelkörper querverlaufende Rippen, die bei gespreiztem Riegelkörper in eine korrespondierende Profilierung der Hohlprofilstange eingreifen. Bei gespanntem Riegelkörper ist der Verbinder an seinem Fussende im stirnseitigen Hohlraum der Hohlprofilstange lösbar fixiert.

Die deutsche Gebrauchsmusteranmeldung Nr. 298 01 893.4 des Anmelders offenbart einen Verbinder, bei welchem am Spannhebel seitlich vorspringende Nocken angebracht sind, die beim Umlegen des Spannhebels mit einer Profilierung der Hohlprofilstange in Eingriff bringbar sind. Der Verbinder ist damit über die Nocken des Spannhebels in der Hohlprofilstange fixiert. Bei beiden genannten Verbindern besteht die Schwierigkeit, dass infolge der Profilierung der Hohlprofilstange eine stufenlose Tiefeneinstellung des Verbinders bezüglich der Hohlprofilstange nicht möglich ist.

Der Erfindung liegt die Aufgabe zugrunde, einen Verbinder der genannten Gattung zu schaffen, dessen Fussende stufenlos verstellbar ist und der trotzdem eine hohe Auszugskraft gewährleistet.

Die Aufgabe ist bei einem gattungsgemässen Verbinder gemäss Kennzeichen des Anspruchs 1 gelöst. Dadurch werden die Halteklauen gegen die Wandung der Hohlprofilstange gepresst und. verankern sich in dieser. Die Halteklauen sind an keine Profilierung der Hohlprofilstange gebunden und könnnen somit in jeder Stellung des Verbinders in Eingriff mit der Hohlprofilstange gebracht werden. Möglich ist auch eine Verwendung einer Hohlprofilstange, die eine Wandung mit einer glatten Innenseite' aufweist. In beiden Fällen ist eine stufenlose Verstellbarkeit gewährleistet. Die Erfindung hat den weiteren Vorteil, dass Toleranzen bei der Herstellung der Hohlprofilstangen und auch Toleranzen beim Verbinder selbst einen wesentlich geringeren Einfluss ausüben als bisher. -Ein exakter Eingriff zwischen Riffelung und Nocken wie beim oben genannten Verbinder, ist nicht erforderlich. die Halteklauen können wie erwähnt an jeder Stelle an der Wandung der Hohlprofilstange eingreifen.

Der erfindungsgemässe Verbinder ermöglicht einen einfacheren, schnelleren und zugleich exakteren Zusammenbau eines Gestells aus Hohlprofilstangen. Die stufenlose Verstellbarkeit des Fusses ermöglicht eine unabhängige Ausrichtung der Hohlprofilstangen. Eine genaue Positionierung des Verbinders bezüglich einer Riffelung oder dergleichen ist nicht erforderlich.

Eine besonders hohe Auszugskraft ergibt sich dann, wenn die Halteklauen vorstehende und widerhakenartige sowie scharfe Krallen sind. Diese Krallen graben sich bei gespanntem Halteelement in der zu verbindenden Hohlprofilstange und verankern damit besonders zuverlässig den Verbinder in dieser Hohlprofilstange. Vorzugsweise ist die Hohlprofilstange aus einem Blech hergestellt. Die widerhakenartigen und scharfen Krallen sind vorzugsweise aus einem harten Werkstoff, insbesondere Stahl, vorzugsweise Federstahl hergestellt.

Das Halteelement wird nach einer Weiterbildung der Erfindung mit dem Spannhebel gespannt. Dies kann besonders zuverlässig und einfach mittels einer keilförmigen Fläche erfolgen. Diese Fläche ist vorzugsweise am Halteelement angeordnet. Mit einer geeigneten Neigung dieser Fläche kann eine optimale Kraft zur Spannung des Halteelementes ausgeübt werden.

Der Spannweg und die Spannkraft kann durch die Neigung dieser Fläche eingestellt werden.

Eine besonders kostengünstige Herstellung des Halteelementes ergibt sich dann, wenn dieses gemäss einer Weiterbildung der Erfindung als geschlossenes Band aus federndem Werkstoff, vorzugsweise Federstahl hergestellt ist. Die Halteklauen, bzw. widerhakenartigen Krallen können durch Stanzen des Bandes hergestellt werden. Der Federstahl ergibt besonders dauerhafte und widerstandsfähige Krallen.

Eine besonders kostengünstige Herstellung ergibt sich dann, wenn das Halteelement separat hergestellt und in ein Gehäuse des Verbinders eingesetzt ist. Das Fussende weist vorzugsweise ein viereckiges Führungsgehäuse auf, das in den stirnseitigen Hohlraum der anzuschliessenden Hohlprofilstange eingesetzt wird. Wesentlich ist, dass bei diesem Verbinder die Haltefunktion und die Führungsfunktion des Fusses getrennt sind. Die Haltefunktion wird durch das Halteelement und die Führungsfunktion durch das Führungsgehäuse erfüllt.

Weitere vorteilhafte Weiterbildungen ergeben sich aus den abhängigen Patentansprüchen, der nachfolgenden Beschreibung sowie der Zeichnung. Ausführungsbeispiele der Erfindung werden nachfolgend anhand der Zeichnung näher erläutert. Es zeigen:
Figur 1 eine Ansicht eines erfindungsgemässen Verbinders,
Figur 2 eine weitere Ansicht des erfindungsgemässen Verbinders,
Figur 3 eine Ansicht eines Halteelements,
Figur 4 eine weitere Ansicht des Halteelements,
Figur 5 eine Ansicht einer Stirnseite einer Hohlprofilstange,
Figuren 6 und 7 schematisch einen Teilquerschnitt des Verbinders und einer Hohlprofilstange zur Illustration des Eingriffs der Haltekrallen an der Profilstange, und
Figur 8 eine Ansicht einer Variante des Verbinders.

Der Verbinder 1 besteht aus einem vorzugsweise aus Blech hergestellten Gehäuse 3, einem beispielsweise aus Aluminium hergestellten Spannhebel 4 sowie einem ebenfalls vorzugsweise aus Metall hergestellten Halteelement 5.

Der Hebel 4 besitzt einen Arm 22 und einen Exzenter 9, der um eine Achse A schwenkbar ist. Der Hebel 4 ist am Arm 22 in Richtung des Pfeils 21 um die Achse A verschwenkbar. In der gezeigten Position hält der unrunde Exzenter 9 ein Kopfende 6 sowie zwei daran angeformte Spannbacken 8 in einer aufgeweiteten und gespannten Position. Das Kopfende 6 kann entspannt werden, indem der Spannhebel 4 am angeformten Arm 22 in Richtung des Pfeiles 21 um die Achse A verschwenkt wird. Das Spannen des Kopfendes 6 mit einem Spannhebel 4 ist an sich bekannt und hierzu wird insbesondere auf die EP 0 675 292 A1 verwiesen. Diese Druckschrift wird hier zur Offenbarung beigezogen.

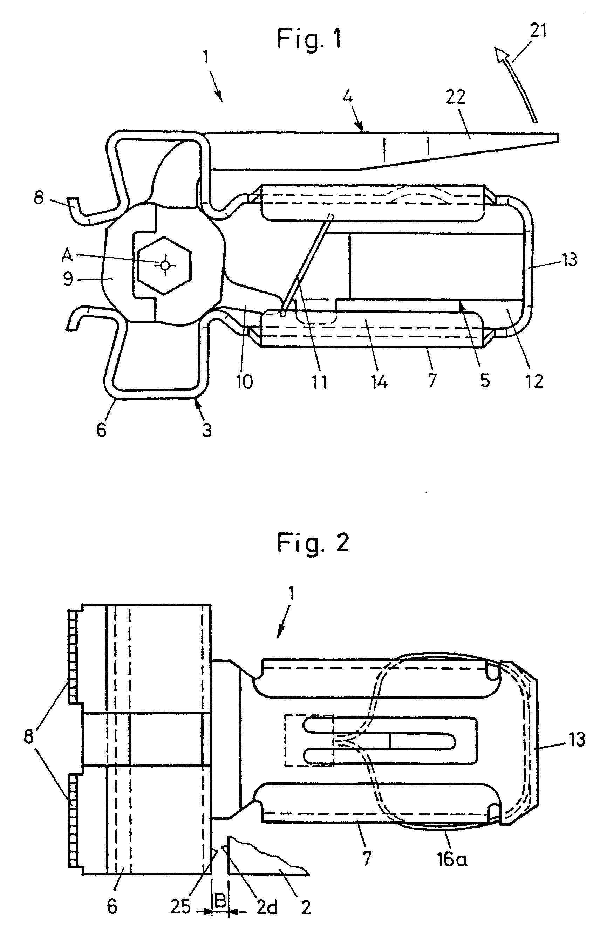

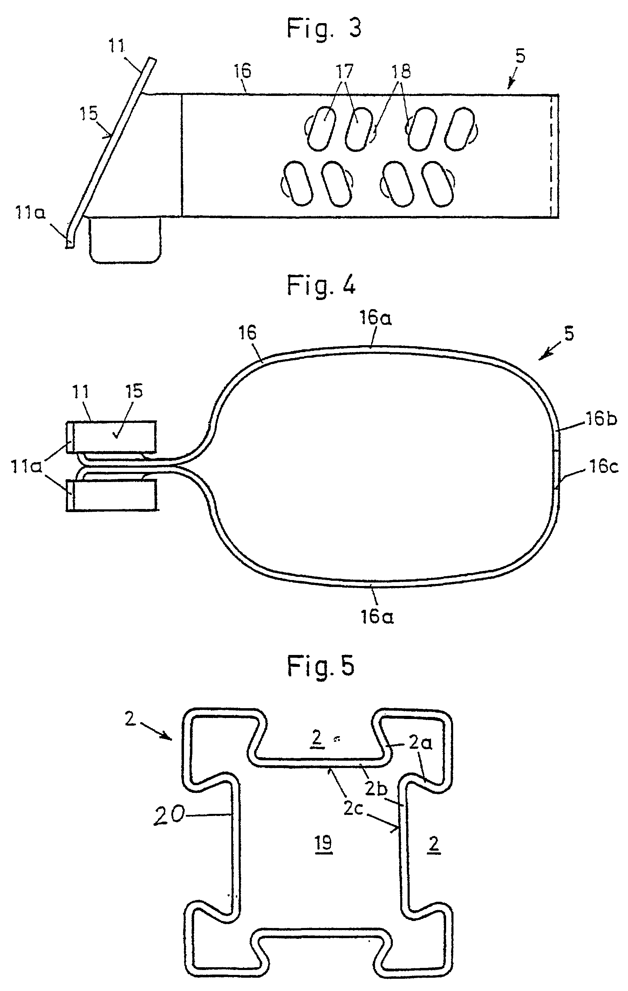

Wie die Figur 1 zeigt, ist am Exzenter 9 ein rückwärts in das Gehäuse 3 vorspringender Ansatz 10 angeformt, der in der gezeigten Position des Spannhebels 4 das Halteelement 5 in einer gespannten Position hält. Dieses Halteeelement 5 ist in einen Innenraum 12 eines Fusses 7 des Gehäuses 3 eingesetzt. Es besteht gemäss den Figuren 3 und 4 im wesentlichen aus einem geschlossenen Band 16 vorzugsweise aus Federstahl und zwei daran befestigten Platten 11 mit jeweils einer geneigten Fläche 15. Der Ansatz 10 ist gegen die Fläche 15 gespannt. An einem hinteren Ende 16b ist das Halteelement 5 an einem hinteren Wandteil 13 (Figur 1) des Gehäuses 3 abgestützt. Ein hier nicht gezeigter Zapfen des Gehäuses 3 ragt in eine Öffnung 16c des Halteelementes 5 ein und verhindert ein seitliches Verschieben des Halteelementes 5 im Gehäuse 3. In Seitenbereiche 16a des Halteelements 5 sind zwei Reihen mit mehreren Öffnungen 17 eingearbeitet, die jeweils eine seitlich vorspringende vorzugsweise scharfe Kralle 18 besitzen. Die Öffnungen 17 und die Krallen 18 sind beispielsweise Stanzungen.

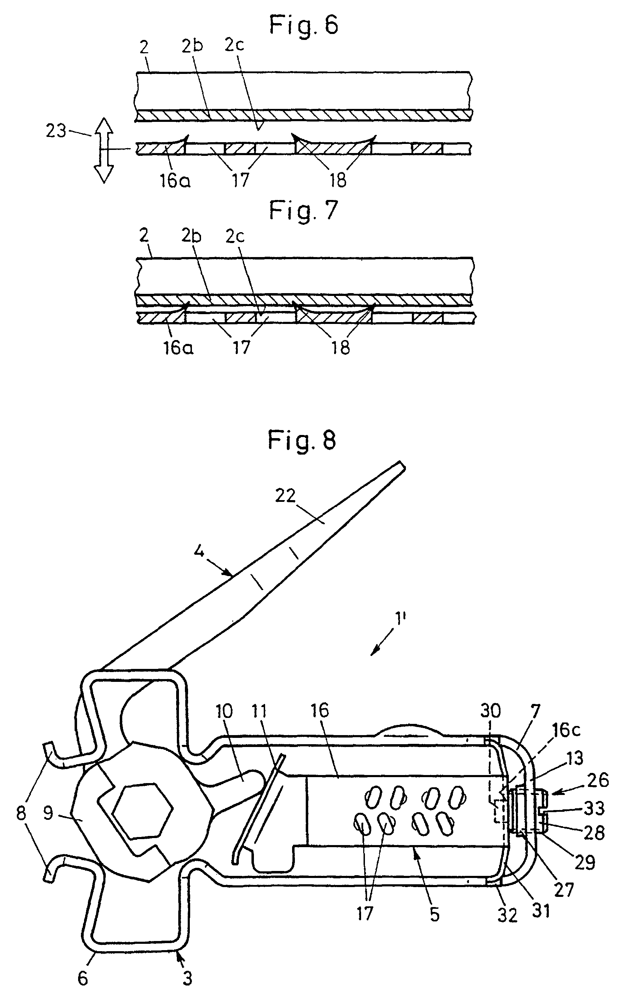

Das Halteelement 5 ist im Gehäuse 3 so positioniert, dass die Seitenbereiche 16a mit den Krallen 18 in gespannter Lage gemäss Figur 2 seitlich aus dem Gehäuse 3 hinausragen. Diese Seitenbereiche 16a sind hierbei, also bei gespanntem Halteelement 5, gegen jeweils eine Innnenseite 2c einer Wandung 2b der in Figur 5 gezeigten Hohlprofilstange 2 gespannt. Die Spannkraft ist so eingestellt, dass sich die scharfen Krallen 18 in die Wandung 2b eingraben und damit das Halteelement 5 in der Profilstange 2 verankern. Die Figur 7 zeigt, wie sich die Krallen 18 in die Wandung 2b eingraben, wenn das Halteelement 5 gespannt ist.

Das Halteelement 5 wird entspannt, indem der Spannhebel 4 in Richtung des Pfeils 21 verschwenkt wird. Der Ansatz 10 wird dann entsprechend in Figur 1 im Gegenuhrzeigersinn nach oben verschwenkt und hierbei kann sich das Halteelement 5 entspannen und in die in Figur 4 gezeigte Position zurückkehren. Die Figur 2 zeigt mit gestrichelten Linien die gespannte und weniger runde und im wesentlichen etwa quadratische Form des Halteelements 5.

Beim Entspannen verlässt der Ansatz 10 eine Rastposition, die durch einen abgebogenen Rand 11a gemäss Figur 3 gegeben ist. Umgekehrt wird beim Einschwenken des Spannhebels 4 in die in Figur 1 gezeigte Position der Ansatz 10 am Rand 11a eingerastet, was spürbar ist und damit die Endposition des Spannhebels 4 anzeigt.

Beim Spannen gleitet der Ansatz 10 auf der Fläche 15 an der Platte 11 entlang und spannt damit das Halteelement 5. Wesentlich ist nun, dass ein solches Spannen an der geneigten Platte 11 von Toleranzen und Massabweichungen wenig beeinflusst wird. Die genaue Position beispielsweise der Platte 11 hat auf die Spannung des Halteelements 5 einen vergleichsweise geringen Einfluss. Millimeterabweichungen in der Position des Halteelementes 5 beeinflussen die Funktion des Halteelementes 5 nicht. Beim Spannen und Entspannen des Halteelementes 5 werden die Krallen 18 gemäss dem Doppelpfeil 23 der Figur 6 gegen die Wandung 2b bzw. von dieser weg bewegt. Die beiden Seitenbereiche 16a machen gleichzeitig symmetrische und gegenläufige Bewegungen. Das Gehäuse 3 ist hierbei mit seinem Fussende 7 in den stirnseitigen Hohlraum 19 der Hohlprofilstange eingesetzt und in dieser geführt. Die beiden Wangen 8 greifen hierbei bei einer querverlaufenden Hohlprofilstange in eine Schwalbenschwanznut 20 ein und hintergreifen seitliche Flanken 2a. Beim Einschwenken des Spannhebels 4 in die in Figur 1 gezeigte Position wird das Kopfende 6 und gleichzeitig das Halteelement 5 gespannt. Im geöffneten Zustand übt der Spannhebel 4 auf das Kopfende 6 und das Fussende 7 eine Vorspannung aus. Vorzugsweise ist die Vorspannung am Kopfende 6 grösser als am Fussende. Dies hat den Vorteil, dass der Verbinder 1 an seinem Kopfende 6 in der entspannten Position bereits provisorisch an einer Hohlprofilstange 2 fixiert werden kann. Bei einer solchen provisorischen Fixierung des Verbinders 1 kann dann die mit dem Fussende 7 zu verbindende Hohlprofilstange verschoben werden, ohne dass sich hierbei der Verbinder am Kopfende 6 löst. Dies ist beim Montieren eines Gestelles vorteilhaft, da dann die Stangen bei provisorisch eingesetzten Verbindern gerichtet werden können. Nach dem Ausrichten werden dann die Verbinder 1 durch Umlegen des Spannhebels 4 endgültig fixiert. Wie erwähnt ist ein wiederholtes Lösen und Spannen des Verbinders 1 ohne weiteres möglich.

Zum Montieren eines Verbinders 1 wird das Kopfende 6 bei ausgeschwenktem Hebelarm 22 in eine Schwalbenschwanznut 20 eingeschoben. Die vom Exzenter 9 auf die Spannbacken 8 ausgeübte Vorspannung ermöglicht eine Längsverschiebung des Verbinders 1 in der Schwalbenschwanznut 20 und fixiert den Verbinder 1 so, dass er in seiner Längsrichtung nicht aus der Schwalbenschwanznut 20 ohne grösseren Kraftaufwand herausgezogen werden kann. Nun wird die zweite zu verbindende Hohlprofilstange 2 auf das Fussende 7 aufgeschoben. Sind die beiden Hohlprofilstangen 2 wie vorgesehen ausgerichtet, so wird der Spannhebel 4 in die in Figur 1 gezeigte Position verschwenkt. Die auf das Fussende 7 aufgeschobene Hohlprofilstange 2 kann mit ihrer Stirnseite hierbei an den beiden Schultern 25 des Kopfendes 6 anliegen. Möglich ist aber auch gemäss Figur 2 ein Abstand 8 zwischen diesen Schultern 25 und der Stirnseite 2d der Hohlprofilstange 2. Dieser Abstand B ist vor dem Einschwenken des Spannhebels 4 stufenlos einstellbar. Nach dem Einschwenken des Spannhebels 4 ist das Kopfende 6 fest mit der einen Hohlprofilstange 2 und das Fussende 7 mit der anderen Hohlprofilstange fest verbunden. Der Exzenter 9 mit dem Ansatz 10 hält das Halteelement 5 dauernd gespannt und entsprechend bleiben die scharfen Krallen 18 in Eingriff mit den Wandungen 2b, wie in Figur 7 dargestellt. Die Wandungen 2b sind beispielsweise aus Eisenblech hergestellt und damit wesentlich weicher als die beispielsweise aus Federstahl bestehenden Abschnitte 16a des Halteelementes 5. Die Krallen 18 sind vorzugsweise wechselseitig angeordnet, wie dies aus den Figuren 3 und 7 ersichtlich ist. Der Verbinder 1 und die auf das Fussende 7 aufgeschobene Hohlprofilstange 2 können damit weder in der einen noch in der anderen Längsrichtung der Hohlprofilstange gegeneinander verschoben werden. Ebenfalls ist ein Verdrehen dieser beiden Teile nicht möglich, da das Fussende 7 des Gehäuses 3 korrespondierend zum Hohlraum 19 ausgebildet ist. Seitliche Abbiegungen 14 geben eine zusätzliche Abstützung und führen den Verbinder 1 im Hohlraum 19.

Der Verbinder 1' gemäss Figur 8 weist zusätzlich ein Spannmittel 26 auf, das am Fussende 7 angeordnet ist und eine Halteschraube 28 mit einem Gewinde 29 aufweist. Die Halteschraube 28 ist in eine Aufnahme 27 mit einer hier nicht gezeigten Gewindebohrung eingeschraubt und besitzt zu ihrer Bedienung einen von aussen zugänglichen Schlitz 33 oder ähnliche Mittel. Am gegenüberliegenden Ende weist die Halteschraube 28 einen zapfenförmigen Ansatz 30 auf, der in die Bohrung 16c des Halteelementes 5 eingreift. Das hintere Ende 16b ist somit am inneren Ende der Halteschraube 28 abgestützt. Zwei seitliche federelastische Arme 31 des Halteelementes 5 greifen jeweils in eine Öffnung 32 des Gehäuses 3 ein und zentrieren das Halteelement 5 im Gehäuse 3. Wird die Halteschraube 28 in die Aufnahme 27 hineingeschraubt, so bewegt sie sich in Figur 8 nach links und um den gleichen Betrag wird das hintere Ende 16b des Spannelementes 5 nach links bewegt. Dies bewirkt eine federelastische Verkürzung und gleichzeitig eine Erhöhung der Spannung des Spannelementes 5, wenn dieses gegen die Wandungen 2b des Hohlprofils 2 gespannt ist. Ein Herausdrehen der Halteschraube 28 aus der Aufnahme 27 bewirkt im Gegensatz dazu eine Verlängerung des Halteelementes 5 und damit eine kleinere Spannung im montierten Zustand.

Mit der genannten Einstellung lässt sich die Auszugskraft des Verbinders 1' genau einstellen, da diese Kraft wesentlich abhängig ist von der Spannung des Halteelementes 5. Die Haltekraft lässt sich automatisch einstellen, indem sie am montierten Verbinder gemessen und aufgrund der gemessenen Kraft die Spannung durch Ein- bzw. Ausdrehen der Halteschraube 28 verändert wird. Auch eine zu grosse Spannung und damit ein ungewünschtes Klemmen beim Montieren des Verbinders 1' kann durch eine optimale Einstellung vermieden werden. Die optimale Einstellung der Spannung hat zudem den Vorteil, dass an der Hohlprofilstange 2 grössere Fertigungstoleranzen zugelassen werden könnten, da Abweichungen durch eine genannte Einstellung an den Spannmitteln 26 berücksichtigt werden können.

## Patentansprüche

1. Verbinder zum Verbinden von zwei quer zueinander verlaufenden Hohlprofilstangen (2), mit einem Kopfende (6), das in einer aussenseitigen Nut (20) einer ersten Hohlprofilstange (2) festlegbar ist und einem einen Innenraum (12) aufweisendes Fassende (7), das in einem stirnseitigen Hohlraum (19) einer zweiten Hohlprofilstange (2) festlegbar ist und mit einem Spannhebel (4), **dadurch gekennzeichnet, dass** das Fussende (7) in seinem Innenraum (12) wenigstens ein spannbares Halteelement (5) mit mehreren Halteklauen (18) zur lösbaren Verankerung des Verbinders in Seitenwandungen (2b) des genannten stirnseitigen Hohlraum (19) aufweist.

2. Verbinder nach Anspruch 1, **dadurch gekennzeichnet, dass** die Halteklauen (18) vorstehende und widerhakenartige sowie scharfe Krallen (18) sind.

3. Verbinder nach Anspruch 1 oder 2, **dadurch gekennzeichnet, dass** das Halteelement (5) federnd ausgebildet ist und die Halteklauen (18) durch Spannen des Halteelementes (5) anlegbar sind.

4. Verbinder nach einem der Ansprüche 1 bis 3, **dadurch gekennzeichnet, dass** das Halteelement (5) ein geschlossenes Band aus federndem Werkstoff, vorzugsweise aus Federstahl aufweist.

5. Verbinder nach einem der Ansprüche 1 bis 3, **dadurch gekennzeichnet, dass** das Halteelement (5) mittels des Spannhebels (4) spannbar ist.

6. Verbinder nach einem der Ansprüche 1 bis 4, **dadurch gekennzeichnet, dass** das Halteelement (5) mit dem Spannhebel (4) über eine geneigte Spannfläche (15) spannbar ist.

7. Verbinder nach einem der Ansprüche 1 bis 5, **dadurch gekennzeichnet, dass** das Halteelement (5) in den beiden Richtungen einer Schwenkachse (A) des Spannhebels (4) spannbar ist.

8. Verbinder nach einem der Ansprüche 1 bis 6, **dadurch gekennzeichnet, dass** das Halteelement (5) mittels eines nasenartigen Ansatzes (10) des Spannhebels (4) in Längsrichtung des Fussendes (7) zusammendrückbar ist.

9. Verbinder nach einem der Ansprüche 1 bis 7, **dadurch gekennzeichnet, dass** das Fussende (7) ein im Querschnitt etwa viereckiges Führungsgehäuse aufweist, dass- das Halteelement (5) als separat hergestelltes Teil in dieses Gehäuse eingesetzt ist und dass dieses Gehäuse seitliche Öffnungen für den Durchtritt eines mit Halteklauen.(18) versehenen Bereiches (16a) des Halteelementes (5) aufweist.

10. Verbinder nach einem der Ansprüche 1 bis 8, **dadurch gekennzeichnet, dass** das Halteelement (5) Rastmittel (11a) zum Fixieren des Spannhebels (4) in geschlossenem Zustand aufweist.

11. Verbinder nach einem der Ansprüche 1 bis 9, **dadurch gekennzeichnet, dass** die Halteklauen (18) in Längsrichtung des Fussendes (7) wechselnd ausgerichtet sind.

12. Verbinder nach einem der Ansprüche 1 bis 11, **gekennzeichnet durch** Spannmittel (26) zum Einstellen der Spannkraft des Halteelementes (5).

13. Verbinder nach Anspruch 12, **dadurch gekennzeichnet, dass** das Spannmittel (26) am Fussende (7) gelagert ist und ein verstellbares Teil (28) zum Spannen des Halteelementes (5) aufweist.

14. Verbinder nach Anspruch 13, **dadurch gekennzeichnet, dass** das spannbare Teil (28) eine Halteschraube ist.

15. Verbinder nach Anspruch 13 oder 14, **dadurch gekennzeichnet, dass** das verstellbare Teil (28) einen Ansatz (30), insbesondere einen Zapfen, aufweist, der an einem stirnseitigen Ende des Halteelementes (5) mit diesem in Eingriff ist.

16. Gestell mit wenigstens zwei Hohlprofilstangen (2) und wenigstens einem Verbinder (1) gemäss Anspruch 1, **dadurch gekennzeichnet, dass** die Hohlprofilstangen (2) aus einem Werksstoff hergestellt sind, der wesentlich weicher ist als der Werkstoff des Halteelementes (5).

17. Gestell nach Anspruch 16, **dadurch gekennzeichnet, dass** die Hohlprofilstangen (2) aus Blech, insbesondere Eisenblech und das Halteelement (5) im wesentlichen aus gehärtetem Stahl, insbesondere Federstahl hergestellt ist.

## Claims

1. Connector for connecting two hollow profile rods (2) running transversely to one another, having a head end (6) which can be secured in an outer groove (20) of a first hollow profile rod (2), and having a foot end (7), which has an interior (12) and can be secured in an end cavity (19) of a second hollow profile rod (2) and having a clamping lever (4), **characterized in that**, in its interior (12), the foot end (7) has at least one clampable retaining element (5) with a plurality of retaining jaws (18) for the releasable anchoring of the connector in side walls (2b) of the abovementioned end cavity (19).

2. Connector according to Claim 1, **characterized in that** the retaining jaws (18) are projecting, barb-like and sharp claws (18).

3. Connector according to Claim 1 or 2, **characterized in that** the retaining element (5) is of resilient design and the retaining jaws (18) can be placed in position by virtue of the retaining element (5) being clamped.

4. Connector according to one of Claims 1 to 3, **characterized in that** the retaining element (5) has a closed strip made of resilient material, preferably of spring steel.

5. Connector according to one of Claims 1 to 3, **characterized in that** the retaining element (5) can be clamped by means of the clamping lever (4).

6. Connector according to one of Claims 1 to 4, **characterized in that** the retaining element (5) can be clamped by the clamping lever (4) via an inclined clamping surface (15).

7. Connector according to one of Claims 1 to 5, **characterized in that** the retaining element (5) can be clamped in the two directions of a pivot axis (A) of the clamping lever (4).

8. Connector according to one of Claims 1 to 6, **characterized in that** the retaining element (5) can be compressed in the longitudinal direction of the foot end (7) by means of a nose-like extension (10) of the clamping lever (4).

9. Connector according to one of Claims 1 to 7, **characterized in that** the foot end (7) has a cross-sectionally approximately quadrilateral guide housing, **in that** the retaining element (5) is inserted into said housing as a separately produced part, and **in that** said housing has lateral openings for the through-passage of a region (16a) of the retaining element (5), said region being provided with retaining jaws (18).

10. Connector according to one of Claims 1 to 8, **characterized in that** the retaining element (5) has latching means (11a) for fixing the clamping lever (4) in the closed state.

11. Connector according to one of Claims 1 to 9, **characterized in that** the retaining jaws (18) are oriented alternately in the longitudinal direction of the foot end (7).

12. Connector according to one of Claims 1 to 11, **characterized by** clamping means (26) for adjusting the clamping force of the retaining element (5).

13. Connector according to Claim 12, **characterized in that** the clamping means (26) is mounted at the foot end (7) and has an adjustable part (28) for clamping the retaining element (5).

14. Connector according to Claim 13, **characterized in that** the clampable part (28) is a retaining screw.

15. Connector according to Claim 13 or 14, **characterized in that** the adjustable part (28) has an extension (30), in particular a stub, which is in engagement with the retaining element (5) at one end of the latter.

16. Framework having at least two hollow profile rods (2) and at least one connector (1) according to Claim 1, **characterized in that** the hollow profile rods (2) are produced from a material which is considerably more flexible than the material of the retaining element (5).

17. Framework according to Claim 16, **characterized in that** the hollow profile rods (2) are produced from sheet metal, in particular sheet iron, and the retaining element (5) is produced essentially from hardened steel, in particular spring steel.

## Revendications

1. Raccord pour relier deux barres à profil creux (2) s'étendant transversalement l'une par rapport à l'autre, comprenant une extrémité de tête (6) qui peut être fixée dans une rainure extérieure (20) d'une première barre à profil creux (2) et une extrémité de pied (7) présentant un espace interne (12), qui peut être fixée dans un espace creux (19) du côté avant d'une deuxième barre à profil creux (2) et un levier de serrage (4), **caractérisé en ce que** l'extrémité de pied (7) présente, dans son espace interne (12) au moins un élément de retenue serrable (5) comprenant plusieurs griffes de retenue (18) pour l'ancrage réversible du raccord dans des parois latérales (2b) dudit espace creux (19) du côté avant.

2. Raccord selon la revendication 1, **caractérisé en ce que** les griffes de retenue (18) sont des crampons (18) saillants, de type barbes, et acérés.

3. Raccord selon la revendication 1 ou 2, **caractérisé en ce que** l'élément de retenue (5) est élastique et les griffes de retenue (18) peuvent être placées par serrage de l'élément de retenue (5).

4. Raccord selon l'une quelconque des revendications 1 à 3, **caractérisé en ce que** l'élément de retenue (5) présente une bande fermée en matériau élastique, de préférence en acier à ressorts.

5. Raccord selon l'une quelconque des revendications 1 à 3, **caractérisé en ce que** l'élément de retenue (5) peut être serré au moyen du levier de serrage (4).

6. Raccord selon l'une quelconque des revendications 1 à 4, **caractérisé en ce que** l'élément de retenue (5) peut être serré avec le levier de serrage (4) sur une surface de serrage inclinée (15).

7. Raccord selon l'une quelconque des revendications 1 à 5, **caractérisé en ce que** l'élément de retenue (5) peut être serré dans les deux directions d'un axe de pivotement (A) du levier de serrage (4).

8. Raccord selon l'une quelconque des revendications 1 à 6, **caractérisé en ce que** l'élément de retenue (5) peut être comprimé au moyen d'une saillie en forme de nez (10) du levier de serrage (4) dans la direction longitudinale de l'extrémité de pied (7).

9. Raccord selon l'une quelconque des revendications 1 à 7, **caractérisé en ce que** l'extrémité de pied (7) présente un logement de guidage de section transversale approximativement carrée, **en ce que** l'élément de retenue (5) est inséré en tant que pièce fabriquée séparément dans ce logement et **en ce que** ce logement présente des ouvertures latérales pour le passage d'une partie (16a) de l'élément de retenue (5) pourvue de griffes de retenue (18).

10. Raccord selon l'une quelconque des revendications 1 à 8, **caractérisé en ce que** l'élément de retenue (5) présente des moyens d'encliquetage (11a) pour fixer le levier de serrage (4) dans l'état fermé.

11. Raccord selon l'une quelconque des revendications 1 à 9, **caractérisé en ce que** les griffes de retenue (18) sont orientées en alternance dans la direction longitudinale de l'extrémité de pied (7).

12. Raccord selon l'une quelconque des revendications 1 à 11, **caractérisé par** un moyen de serrage (26) pour ajuster la force de serrage de l'élément de retenue (5).

13. Raccord selon la revendication 12, **caractérisé en ce que** le moyen de serrage (26) est monté sur l'extrémité de pied (7) et présente une partie réglable (28) pour serrer l'élément de retenue (5).

14. Raccord selon la revendication 13, **caractérisé en ce que** la partie serrable (28) est une vis de retenue.

15. Raccord selon la revendication 13 ou 14, **caractérisé en ce que** la partie réglable (28) présente une saillie (30), en particulier un tourillon, qui, à une extrémité avant de l'élément de retenue (5), est en engagement avec celui-ci.

16. Bâti comprenant au moins deux barres à profil creux (2) et au moins un raccord (1) selon la revendication 1, **caractérisé en ce que** les barres à profil creux (2) sont fabriquées en un matériau qui est considérablement plus mou que le matériau de l'élément de retenue (5).

17. Bâti selon la revendication 16, **caractérisé en ce que** les barres à profil creux (2) sont fabriquées en tôle, en particulier en tôle de fer et l'élément de retenue (5) est fabriqué essentiellement en acier trempé, en particulier en acier à ressorts.
